# FASCICULE DE BREVET EUROPEEN

(11) **EP 2 002 099 B1**
(45) Date de publication et mention de la délivrance du brevet: **24.02.2010**
(21) Numéro de dépôt: 07731762.6
(22) Date de dépôt: 19.03.2007
(51) Int. Cl.: F02B 29/04, F01P 11/20, F02M 25/07, F02M 31/10, F02N 19/10

(54) **SYSTEME ET PROCEDE DE CONTROLE DE LA TEMPERATURE D'UN MOTEUR SURALIMENTE ET COMPORTANT UN RADIATEUR D'AIR DE SURALIMENTATION**
SYSTEM UND VERFAHREN ZUR STEUERUNG DER TEMPERATUR EINES TURBOAUFGELADENEN MOTORS MIT LADELUFTKÜHLER
SYSTEM AND METHOD FOR CONTROLLING THE TEMPERATURE OF A TURBOCHARGED ENGINE COMPRISING A CHARGE AIR RADIATOR

(30) Priorité: 05.04.2006 FR 0602935
(43) Date de publication de la demande: 17.12.2008
(73) Titulaire: Renault SAS, 92100 Boulogne Billancourt (FR)
(72) Inventeur: ROUAUD, Cedric, F-78000 Versailles (FR); YU, Robert, F-78990 Elancourt (FR)
(86) Numéro de dépôt international: PCT/FR2007/050946
(87) Numéro de publication internationale: WO 2007/113419

(56) Documents cités:
- EP-A1- 1 170 498
- DE-A1- 19 727 277
- FR-A1- 2 463 860
- US-A- 5 215 044
- US-A- 5 407 130
- US-A- 5 896 833
- US-A- 6 145 497

## Description

L'invention concerne un système de contrôle de la température d'un moteur, et le procédé de commande de ce système. Plus particulièrement, elle concerne un moteur qui est suralimenté et qui comporte un radiateur d'air de suralimentation.

Dans les moteurs suralimentés, il est connu de refroidir l'air d'admission après son passage dans un compresseur. En effet, la compression de l'air augmente sa température. En refroidissant, l'air d'admission, qu'on appelle aussi de suralimentation, on augmente sa densité et la capacité maximale du moteur. De plus, on diminue la température maximale atteinte lors de la combustion dans le moteur, ce qui réduit le taux de formation d'oxydes d'azote.

L'un des moyens couramment mis en oeuvre pour contrôler la température des gaz à l'admission est de placer un radiateur sur le circuit d'air de suralimentation, à la sortie du compresseur. Le document FR 2 463 860 dévoile par exemple un système de refroidissement d'un moteur comportant un premier circuit de refroidissement dans lequel un liquide de refroidissement circule. Dans ce circuit, le fluide circule dans un radiateur primaire, est refoulé par une pompe, d'une part vers le moteur, et d'autre part vers un premier radiateur d'air de suralimentation avant de retourner au radiateur primaire. Un deuxième circuit de refroidissement comporte un radiateur secondaire et un deuxième radiateur d'air de suralimentation placé en aval du premier. L'utilisation d'un deuxième circuit de refroidissement permet de fonctionner avec une température de liquide de refroidissement plus basse que celle du premier circuit, et donc de mieux refroidir l'air de suralimentation.

Cependant, le refroidissement de l'air de suralimentation n'est pas souhaitable en permanence. En effet, dans la phase de démarrage à froid du moteur, la faible température dans la chambre de combustion entraîne une combustion incomplète et l'émission de gaz imbrûlés, nocifs pour l'environnement.

Une solution connue pour améliorer la combustion pendant la phase de démarrage à froid est décrite dans le document DE 197 27 277 A1.

C'est donc un objectif de fournir un système de contrôle de la température d'un moteur suralimenté et comportant un circuit de recyclage de gaz d'échappement permettant d'optimiser la température des gaz à l'admission.

Avec cet objectif en vue, l'invention a pour objet un système de contrôle de la température d'un moteur suralimenté et comportant un radiateur d'air de suralimentation, le système comportant un premier circuit alimentant en liquide caloporteur le radiateur d'air de suralimentation pour contrôler la température de l'air de suralimentation, le premier circuit comportant en outre un réservoir thermique apte à réchauffer le liquide caloporteur.

Le radiateur d'air de suralimentation sert normalement à refroidir l'air de suralimentation. Cependant, grâce aux moyens selon l'invention, il est possible de réchauffer l'air de suralimentation, en envoyant du liquide chaud en provenance du réservoir thermique dans le radiateur d'air de suralimentation. Ainsi, en particulier en phase de démarrage à froid du moteur, les conditions de combustion dans le moteur thermique sont améliorées, ce qui permet de réduire la quantité de gaz imbrûlés émis pendant cette phase de démarrage. Le réservoir thermique est par exemple un contenant isolé dans lequel du liquide de refroidissement est stocké à une température proche de 100 °C. La solution selon l'invention ne nécessite pas d'adaptation particulière au niveau du moteur, mais utilise un élément, le radiateur d'air de suralimentation, déjà présent sur la plupart des moteurs suralimentés.

Selon l'invention, le premier circuit comporte un premier radiateur et des moyens de sélection pour relier sur commande soit le réservoir thermique, soit le premier radiateur, avec le radiateur d'air de suralimentation, soit les trois éléments. Ainsi, selon l'état thermique du moteur et son point de fonctionnement, soit on apporte de la chaleur à l'air de suralimentation, soit on le refroidit. De plus, en ayant la possibilité de mettre le réservoir thermique et le premier radiateur connectés ensembles, on peut utiliser la chaleur évacuée au niveau du radiateur d'air de suralimentation pour la stocker dans le réservoir thermique, pendant les phases où le refroidissement de l'air de suralimentation est souhaité.

Selon l'invention, le premier circuit comporte en boucle le premier radiateur, le radiateur d'air de suralimentation et une pompe, le réservoir thermique étant placé en parallèle avec la pompe, un bipasse permettant de court-circuiter le premier radiateur sur commande. On peut ainsi établir la circulation du fluide caloporteur soit selon un chemin incluant la pompe, le premier radiateur et le radiateur d'air de suralimentation, soit en envoyant le fluide depuis la pompe vers le réservoir et vers le radiateur d'air de suralimentation par l'intermédiaire du bipasse. Ainsi, des échanges thermiques sont réalisés entre le réservoir thermique et le radiateur d'air de suralimentation.

L'invention s'utilise aussi lorsque le système comporte en outre un deuxième circuit pour refroidir le moteur.

Dans ce cas, on peut prévoir que les moyens de sélection permettent en outre de connecter sur commande le réservoir thermique avec le deuxième circuit. Les moyens de sélection sont par exemple une vanne quatre voies, permettant de mettre en communication deux entrées avec deux sorties. Les entrées sont connectées à des branches respectivement du premier et du deuxième circuit, tandis que les deux sorties sont connectées à la suite de ces branches. La vanne permet de commander l'ouverture du deuxième circuit seul, du premier et du deuxième circuit ensembles, ou de connecter l'entrée du deuxième circuit vers la sortie du premier circuit. On peut ainsi isoler le réservoir thermique ou le mettre en service avec le premier ou le deuxième circuit.

Dans un mode de réalisation particulier, le réservoir thermique est du type à sels fondus, la température de latence étant inférieure à 100 °C. Le réservoir contient des sels réchauffés ou refroidis par la circulation du liquide caloporteur à proximité et qui fondent ou se solidifient à la température de latence. Dans la phase de déstockage de chaleur, la température du liquide reste voisine de la température de latence, même si peu d'énergie est stockée.

L'invention a aussi pour objet un procédé de commande d'un système tel que décrit précédemment, selon lequel on fait circuler le liquide caloporteur du premier circuit dans le réservoir thermique, mais pas dans le premier radiateur, lorsque le moteur est froid, pour réchauffer l'air de suralimentation.

De manière particulière, on contrôle les moyens de sélection pour que, lorsque la température du moteur est inférieure à un seuil prédéterminé, le premier circuit comporte le réservoir thermique avec le radiateur d'air de suralimentation, et lorsque la température du moteur est supérieure à un seuil prédéterminé, le premier circuit comporte le premier radiateur avec le radiateur d'air de suralimentation. Le réservoir thermique déstocke ses calories lorsque le moteur est froid, et l'air de suralimentation est refroidi lorsque le moteur est chaud.

De manière complémentaire, lorsque la température du moteur est supérieure à un seuil prédéterminé et que la chaleur stockée dans le réservoir thermique est inférieure à un seuil prédéterminé, le réservoir thermique est relié au deuxième circuit. Le réservoir thermique reçoit alors des calories en provenance du deuxième circuit. La température dans le deuxième circuit est en général de l'ordre de 100 °C, soit un niveau supérieur à la température dans le premier circuit. La capacité de stockage est alors supérieure, pour le même volume ou la même masse dans le réservoir thermique.

L'invention sera mieux comprise et d'autres particularités et avantages apparaîtront à la lecture de la description qui va suivre, la description faisant référence aux dessins annexés parmi lesquels :
- la figure 1 est une vue schématique d'un moteur comportant un système de contrôle de température selon l'invention ;
- la figure 2 est une vue schématique du système selon l'invention ;
- les figures 3 à 7 sont des vues similaires à la figure 2, montrant le sens de circulation du fluide caloporteur selon différentes situations ;
- la figure 8 est une vue similaire à la figure 2 d'un deuxième mode de réalisation de l'invention.

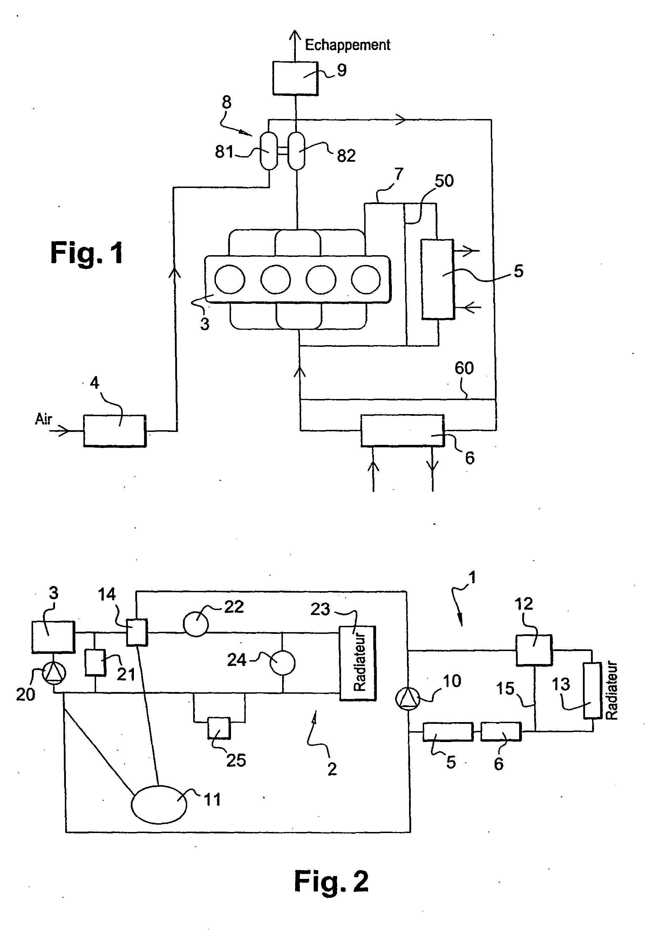

Un moteur 3 thermique avec certains des équipements qui permettent son fonctionnement pour la motorisation d'un véhicule automobile est montré sur la figure 1. Il est alimenté en air d'admission par l'intermédiaire d'un filtre à air 4, d'un compresseur 81 d'un turbocompresseur 8 et d'un radiateur d'air de suralimentation 6. Le moteur 3 thermique génère des gaz d'échappement qui entraînent une turbine 82 du turbocompresseur 8 puis passent par un dispositif de traitement 9 classique. Une partie des gaz d'échappement peut être recyclée par une dérivation 7 placée en amont de la turbine 82 et connectée en aval du radiateur d'air de suralimentation 6. Un radiateur de gaz recyclés 5 est placé sur la dérivation 7. Eventuellement, un bipasse d'admission 60 est monté en parallèle au radiateur d'air de suralimentation 6 pour court-circuiter l'air d'admission qui traverse le radiateur d'air de suralimentation 6, et un bipasse d'échappement 50 est monté en parallèle au radiateur de gaz recyclés 5 pour court-circuiter les gaz recyclés qui traverse le radiateur de gaz recyclés 5.

En se référant à la figure 2, le moteur 3 est équipé d'un système de contrôle de la température comportant un premier circuit 1, pour le contrôle de la température du radiateur d'air de suralimentation 6 et du radiateur de gaz recyclés 5, et un deuxième circuit 2 pour le contrôle de la température du moteur 3.

Le deuxième circuit 2 permet la circulation d'un fluide de refroidissement entre le moteur 11 et un radiateur principal 23 placé dans un flux d'air provenant de l'extérieur du véhicule. Le premier circuit 1 comporte classiquement un thermostat 22 à la sortie du moteur 3 qui coupe ou non la circulation du fluide vers le radiateur principal 23. Une pompe principale 20, placée à l'entrée du moteur 3, fait circuler le fluide dans le premier circuit 1. Un aérotherme 21, destiné à chauffer l'habitacle du véhicule, est placé en boucle avec le la pompe principale 20 et le moteur 3, en amont du thermostat 22. Le deuxième circuit 2 comporte également un vase d'expansion 24 et un radiateur eau-huile 25 pour refroidir l'huile du moteur et de la transmission.

Le premier circuit 1 comporte une pompe secondaire 10, une vanne trois voies 12, un radiateur secondaire 13 et un bipasse secondaire 15 montés en parallèle, puis le radiateur d'air de suralimentation 6 et le radiateur de gaz recyclés 5 montés en série, en amont de la pompe secondaire 10. La vanne trois voies 12 permet d'orienter le liquide caloporteur vers le radiateur secondaire 13 ou vers le bipasse secondaire 15.

Le premier circuit 1 comporte en outre un réservoir thermique 11. Celui-ci est connecté en boucle avec la pompe secondaire 10, par l'intermédiaire d'une vanne quatre voies 14, en amont du réservoir thermique 11. La vanne quatre voies 14 permet de mettre en communication deux entrées avec deux sorties selon un schéma qui est détaillé ci-après. La vanne quatre voies 14 et la vanne trois voies 12 sont des moyens de sélection qui permettent de déterminer le mode fonctionnement du système selon l'invention. Une première des entrées est connectée à la sortie de la pompe secondaire 10, tandis qu'une première des sorties de la vanne quatre voies 14 est connectée à l'entrée du réservoir thermique 11. La deuxième entrée est connectée à la sortie du moteur 3 thermique tandis que la deuxième sortie est connectée à l'entrée du thermostat 22. Par ailleurs, la sortie du réservoir thermique 11 est également connectée en amont de la pompe principale 20. Le système comporte des sondes de températures et une unité de commande, non représentés, pour déterminer le mode de fonctionnement adapté et piloter les vannes en conséquence.

Différents modes de fonctionnement du système selon l'invention sont possibles.

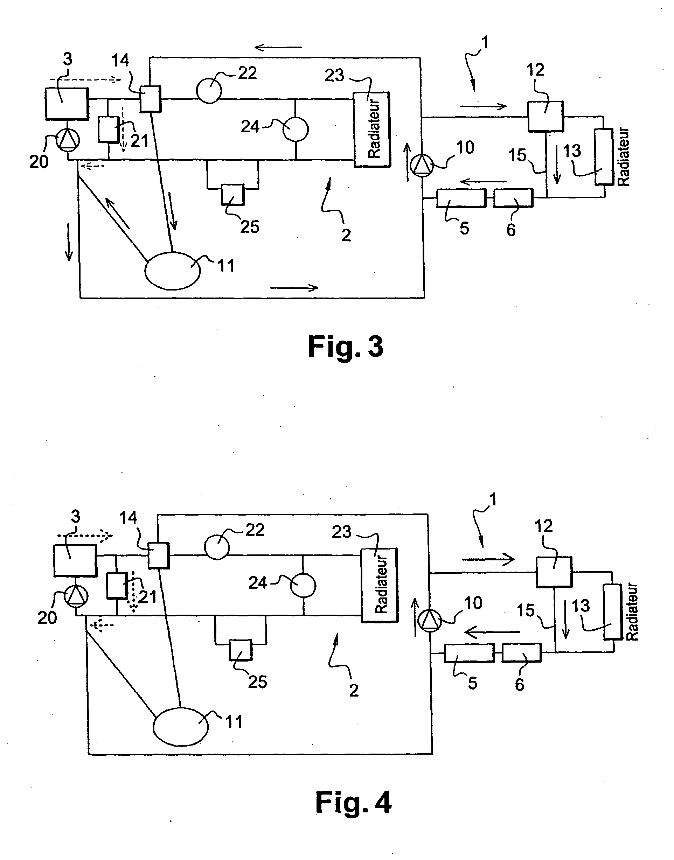

Dès que le système sait que le moteur 3 va être démarré prochainement, la pompe secondaire 10 peut être mise en route. La vanne quatre voies 14 autorise la circulation du liquide en provenance de la pompe secondaire 10 vers le réservoir thermique 11. De plus, la vanne trois voies 12 oriente le liquide vers le bipasse secondaire 15. Le liquide caloporteur circule alors dans le sens des flèches représentées en trait pleins sur la figure 3. Le liquide caloporteur du premier circuit 1 monte alors en température en prélevant des calories dans le réservoir thermique 11. Le système peut savoir que le démarrage est imminent en recevant par exemple une information d'ouverture des portes ou de présence du conducteur derrière le volant du véhicule.

Lorsque le moteur 3 est mis en route et qu'il est encore froid, la pompe principale 20 met en circulation le liquide caloporteur dans le deuxième circuit 2, vers le moteur 3, l'aérotherme 21, puis en retour vers la pompe principale 20. Pour cela, la vanne quatre voies 14 ou le thermostat 22 sont configurés pour bloquer la circulation du liquide en provenance du moteur 3. Les liquides caloporteurs des deux circuits ne se mélangent pas. L'air d'admission traverse le radiateur d'air de suralimentation 6 et est réchauffé grâce aux calories apportées par le liquide caloporteur. Le bipasse d'échappement 50 est par exemple en fonctionnement de telle sorte que les gaz recyclés ne sont pas refroidis.

Dès que la température dans le premier circuit 1 dépasse un seuil prédéterminé, par exemple 50°C, ou que le réservoir thermique 11 n'est plus apte à apporter des calories, la vanne quatre voies 14 est actionnée pour fermer la circulation de liquide caloporteur dans le réservoir thermique 11. La circulation dans le premier circuit 1 s'établit alors en boucle entre la pompe secondaire 10, le bipasse secondaire 15, le radiateur d'air de suralimentation 6 et le radiateur de gaz recyclés 5, comme montré sur la figure 4 par les flèches en traits continus.

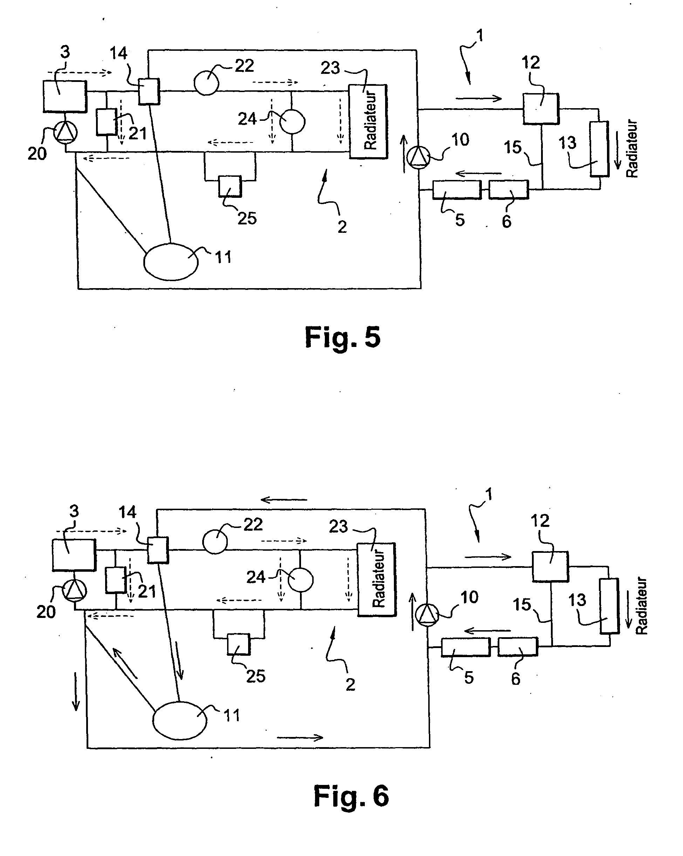

Si la température du liquide caloporteur dans le deuxième circuit 2 augmente et dépasse un seuil prédéterminé, le thermostat 22 et la vanne quatre voies 14 laissent passer le liquide caloporteur en provenance du moteur 3 vers le radiateur principal 23, comme montré par les flèches en traits tiretés de la figure 5. Ce mode de fonctionnement du deuxième circuit 2 est classique.

Enfin, si les conditions de fonctionnement du moteur 3 permettent de déterminer que le refroidissement de l'air d'admission et des gaz recyclés est nécessaire, la vanne trois voies 12 commute pour orienter la circulation du liquide caloporteur du premier circuit 1 à travers le radiateur secondaire 13, comme montré par les flèches en traits continus de la figure 5. La vanne trois voies 12 peut être un thermostat.

Le moteur 3 est alors dans un mode de fonctionnement stabilisé. Si le réservoir thermique 11 nécessite d'être rechargé en calories, on peut procéder, au choix, selon deux modes de fonctionnement. La première possibilité est d'utiliser le premier circuit 1. Pour cela, on commute la vanne quatre voies 14 pour autoriser la circulation du liquide caloporteur du premier circuit 1 vers le réservoir thermique 11, comme montré par les flèches en traits continus sur la figure 6. Le liquide est réchauffé par les calories captées au niveau du radiateur d'air de suralimentation 6 ou du radiateur de gaz recyclés 5 et sert à réchauffer le réservoir thermique 11.

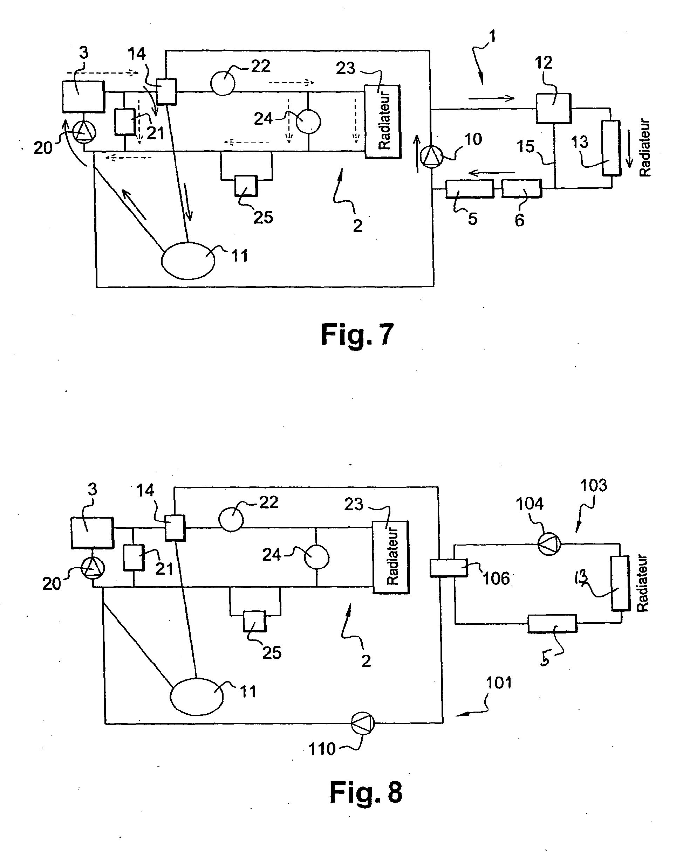

Selon une deuxième possibilité représentée sur la figure 7, la vanne quatre voies 14 est commutée pour orienter une partie du liquide caloporteur en provenance du moteur 3 vers le réservoir thermique 11. La première entrée est fermée. Le retour en provenance du réservoir de stockage s'effectue en amont de la pompe principale 20. Une partie du liquide de refroidissement en provenance du moteur 3 est encore orientée vers le thermostat 22 et le radiateur principal 23.

Dans un deuxième mode de réalisation de l'invention, représenté sur la figure 8, le radiateur d'air de suralimentation 106 est un échangeur liquide/air comportant deux entrées et deux sorties. Le premier circuit 101 comporte le radiateur d'air de suralimentation 106, la pompe secondaire 110, le réservoir thermique 11 et la vanne quatre voies 14. Un troisième circuit 103 comporte le radiateur d'air de suralimentation 106, le radiateur de gaz recyclés 5, le radiateur secondaire 13 et une troisième pompe 104.

L'invention n'est pas limitée au mode de réalisation qui vient d'être décrit uniquement à titre d'exemple. Les vannes trois voies et quatre voies peuvent être remplacées par une combinaison de vannes simples réalisant la même fonction. Le premier circuit peut être réduit au radiateur d'air de suralimentation, au réservoir et à la pompe.

## Revendications

1. Système de contrôle de la température d'un moteur (3) suralimenté et comportant un radiateur d'air de suralimentation (6), le système comportant un premier circuit (1) alimentant en liquide caloporteur le radiateur d'air de suralimentation (6) pour contrôler la température de l'air de suralimentation, le premier circuit (1) comportant en boucle un premier radiateur (13), le radiateur d'air de suralimentation (6) et une pompe (10), des moyens de sélection (12, 14) pour relier sur commande soit un réservoir thermique (11) apte à réchauffer le liquide caloporteur, soit le premier radiateur (13), avec le radiateur d'air de suralimentation (6), un bipasse (15) permettant de court-circuiter le premier radiateur (13) sur commande, **caractérisé en ce que** le réservoir thermique (11) est placé en parallèle avec la pompe (10).

2. Système selon la revendication 1, **caractérisé en ce qu'**il comporte en outre un deuxième circuit (2) pour refroidir le moteur (3).

3. Système selon la revendication 2, dans lequel les moyens de sélection (14) permettent en outre de connecter sur commande le réservoir thermique (11) avec le deuxième circuit (2).

4. Système selon la revendication 1, dans lequel le réservoir thermique (11) est du type à sels fondus, la température de latence étant inférieure à 100 °C.

5. Procédé de commande d'un système selon la revendication 1, **caractérisé en ce qu'**on fait circuler le liquide caloporteur du premier circuit (1) dans le réservoir thermique (11), mais pas dans le premier radiateur (13), lorsque le moteur (3) est froid, pour réchauffer l'air de suralimentation.

6. Procédé de commande selon la revendication 5, selon lequel lorsque la température du moteur (3) est inférieure à un seuil prédéterminé, le premier circuit (1) comporte le réservoir thermique (11) avec le radiateur d'air de suralimentation (6), et lorsque la température du moteur (3) est supérieure à un seuil prédéterminé, le premier circuit (1) comporte le premier radiateur (13) avec le radiateur d'air de suralimentation (6).

7. Procédé de commande selon la revendication 5, pour un système selon la revendication 3, selon lequel lorsque la température du moteur (3) est supérieure à un seuil prédéterminé et que la chaleur stockée dans le réservoir thermique (11) est inférieure à un seuil prédéterminé, le réservoir thermique (11) est relié au deuxième circuit (2).

## Claims

1. System for controlling the temperature of a supercharged engine (3) comprising a charger radiator (6), the system comprising a first circuit (1) supplying the charger radiator (6) with heat transfer fluid to control the temperature of the charge air, the first circuit (1) comprising, in a loop, a first radiator (13), the charger radiator (6) and a pump (10), selection means (12, 14) for connecting, on demand, either a thermal reservoir (11) able to heat up the heat transfer fluid or the first radiator (13) to the charger radiator (6), bypass (15) allowing the first radiator (13) to be short-circuited on demand, **characterized in that** the thermal reservoir (11) is placed in parallel with the pump (10).

2. System according to Claim 1, **characterized in that** it further comprises a second circuit (2) for cooling the engine (3).

3. System according to Claim 2, in which the selection means (14) also allow the thermal reservoir (11) to be connected to the second circuit (2) on demand.

4. System according to Claim 1, in which the thermal reservoir (11) is of the molten salts type, the latency temperature being lower than 100°C.

5. Method for controlling the system according to Claim 1, **characterized in that** the heat transfer fluid of the first circuit (1) is circulated into the thermal reservoir (11), but not into the first radiator (13), when the engine (3) is cold, in order to heat up the charge air.

6. Control method according to Claim 5, whereby when the temperature of the engine (3) is lower than a predetermined threshold temperature, the first circuit (1) comprises the thermal reservoir (11) with the charger radiator (6), and when the temperature of the engine (3) is higher than a predetermined threshold temperature, the first circuit (1) comprises the first radiator (13) with the charger radiator (6).

7. Control method according to Claim 5, for a system according to Claim 3, whereby when the temperature of the engine (3) is above a predetermined threshold temperature and the heat stored in the thermal reservoir (11) is below a predetermined threshold value, the thermal reservoir (11) is connected to the second circuit (2).

## Patentansprüche

1. System zur Steuerung der Temperatur eines aufgeladenen Motors (3) mit einem Ladeluftkühler (6), wobei das System einen ersten Kreislauf (1) aufweist, der den Ladeluftkühler (6) mit Wärmeübertragungsflüssigkeit versorgt, um die Temperatur der Ladeluft zu steuern, wobei der erste Kreislauf (1) in Schleife einen ersten Kühler (13), den Ladeluftkühler (6), eine Pumpe (10) und erste Wahlmittel (12, 14) zum Verbinden auf Anforderung entweder eines Wärmespeichers (11), der die Wärmeübertragungsflüssigkeit erwärmen kann, oder des ersten Kühlers (13) mit dem Ladeluftkühler (6) umfasst, wobei ein Bypass (15) auf Anforderung das Kurzschließen des ersten Kühlers (13) gestattet, **dadurch gekennzeichnet, dass** der Wärmespeicher (11) parallel zur Pumpe (10) angeordnet ist.

2. System nach Anspruch 1, **dadurch gekennzeichnet, dass** es des Weiteren einen zweiten Kreislauf (2) zum Kühlen des Motors (3) aufweist.

3. System nach Anspruch 2, wobei die Wahlmittel (14) des Weiteren auf Anforderung das Verbinden des Wärmespeichers (11) mit dem zweiten Kreislauf (2) gestatten.

4. System nach Anspruch 1, wobei der Wärmespeicher ein Salzschmelzen-Wärmespeicher (11) ist, wobei die Latenztemperatur unter 100°C ist.

5. Verfahren zur Steuerung eines Systems nach Anspruch 1, **dadurch gekennzeichnet, dass** die Wärmeübertragungsflüssigkeit von dem ersten Kreislauf (1) in den Wärmespeicher (11), aber nicht in den ersten Kühler (13) zirkuliert wird, wenn der Motor (3) kalt ist, um die Ladeluft zu erwärmen.

6. Steuerverfahren nach Anspruch 5, gemäß dem, wenn die Temperatur des Motors (3) unter einem vorbestimmten Schwellwert liegt, der erste Kreislauf (1) den Wärmespeicher (11) mit dem Ladeluftkühler (6) umfasst, und wenn die Temperatur des Motors (3) über einem vorbestimmten Schwellwert liegt, der erste Kreislauf (1) den ersten Kühler (13) mit dem Ladeluftkühler (6) umfasst.

7. Steuerverfahren nach Anspruch 5 für ein System nach Anspruch 3, gemäß dem, wenn die Temperatur des Motors (3) über einem vorbestimmten Schwellwert liegt und die in dem Wärmespeicher (11) gespeicherte Wärme unter einem vorbestimmten Schwellwert liegt, der Wärmespeicher (11) mit dem zweiten Kreislauf (2) verbunden ist.
